# EUROPÄISCHE PATENTSCHRIFT

(11) **EP 3 793 768 B1**
(45) Veröffentlichungstag und Bekanntmachung des Hinweises auf die Patenterteilung: **03.01.2024**
(21) Anmeldenummer: 18725470.1
(22) Anmeldetag: 15.05.2018
(51) Int. Cl.: B23Q 5/36, G05B 19/00, B23Q 1/30, B23Q 1/44

(54) **VORRICHTUNG UND VERFAHREN ZUR ERZEUGUNG EINER RELATIVBEWEGUNG ZWISCHEN EINEM WERKZEUG UND EINEM WERKSTÜCK**
APPARATUS AND METHOD FOR CREATING A RELATIVE MOVEMENT BETWEEN A TOOL AND A WORKPIECE
DISPOSITIF ET PROCÉDÉ SERVANT À GÉNÉRER UN DÉPLACEMENT RELATIF ENTRE UN OUTIL ET UNE PIÈCE

(43) Veröffentlichungstag der Anmeldung: 24.03.2021
(73) Patentinhaber: Universität Stuttgart, 70174 Stuttgart (DE)
(72) Erfinder: ZAHN, Peter, 72636 Frickenhausen (DE); LECHLER, Armin, 74343 Sachsenheim (DE); VERL, Alexander, 71636 Ludwigsburg (DE)
(74) Vertreter: Schmid, Wolfgang
(86) Internationale Anmeldenummer: PCT/EP2018/062608
(87) Internationale Veröffentlichungsnummer: WO 2019/219176

(56) Entgegenhaltungen:
- WO-A1-02/02281
- WO-A1-2008/127173
- DE-A1- 19 851 781
- JP-A- H01 177 938

## Beschreibung

Die Erfindung betrifft eine Vorrichtung zur Erzeugung einer Relativbewegung zwischen einem Werkzeug und einem Werkstück nach der im Oberbegriff von Anspruch 1 näher definierten Art. Des Weiteren betrifft die Erfindung ein Verfahren zur Erzeugung einer Relativbewegung zwischen einem Werkzeug und einem Werkstück gemäß dem Oberbegriff von Anspruch 8.

Derartige Vorrichtungen sind aus dem allgemeinen Stand der Technik bekannt. Beispielsweise werden sie in Werkzeugmaschinen als Vorschubantriebe verwendet.

Solche Vorschubantriebe dienen in Werkzeugmaschinen dazu, eine definierte Bahnführung eines Werkzeugs relativ zu einem Werkstück zu erzeugen, um eine ausreichende Genauigkeit für einen bestimmten Prozess, beispielsweise eine spanende Bearbeitung, herzustellen. Aus Gründen der guten Regelbarkeit sowie der energetischen Effizienz kommen hierzu häufig elektromechanische Servoantriebe zum Einsatz, welche entweder als Direkt- bzw. Linearantriebe ausgeführt oder mit einem mechanischen Getriebe, beispielsweise einem Kugelgewindetrieb, gekoppelt sind.

Beide genannten Ausführungen von Antrieben weisen spezifische Vor- und Nachteile auf. Während Kugelgewindetriebe bezüglich ihrer Auslegung und der Regelparametrierung verhältnismäßig einfach sind, limitiert das Verhalten der mechanischen Übertragungselemente maßgeblich die mit denselben erreichbare Dynamik. Mit Direktantrieben lässt sich dagegen eine deutlich höhere Bandbreite erreichen, die Parametrierung der Regler ist allerdings anspruchsvoller und weniger robust. Beiden Ausführungen ist jedoch gemeinsam, dass ihre elektrischen und mechanischen Parameter maßgeblich und limitierend für das dynamische Verhalten des gesamten Vorschubantriebs sind.

Die bekannten Vorschubantriebe werden meist mit einer numerischen Steuerung bzw. NC-Steuerung gesteuert, deren Kernaufgabe die Umsetzung der in einem entsprechenden NC-Programm definierten Bewegungssätze in eine zeitdiskrete Folge von Positions- bzw. Geschwindigkeits-Sollwerten ist, welche nach Interpolation an die Regler der einzelnen Vorschubantriebe übergeben werden. Bei solchen numerischen Bahnsteuerungen ist die Bewegung sämtlicher Achsen zu jedem Zeitpunkt der Bearbeitung miteinander synchronisiert, so dass eine definierte Bahn im Raum erreicht werden kann. Um die Synchronität der verschiedenen Achsen zu gewährleisten, ist es jedoch notwendig, dass keine der Vorschubachsen außerhalb ihrer dynamischen Fähigkeiten, wie zum Beispiel Maximalkraft bzw. -beschleunigung oder Maximalgeschwindigkeit, betrieben wird, da ansonsten eine Verzerrung der Bahn auftritt.

Mit den oben beschriebenen Antrieben und den dafür eingesetzten Steuerungen soll demnach einer herzustellenden Werkstückkontur mit möglichst konstanter Bahngeschwindigkeit und geringer Konturabweichung gefolgt werden. Mit den bekannten Lösungen können insbesondere unstetige Sollwertprofile jedoch meist nur näherungsweise abgefahren werden. Zum Beispiel ergibt sich bei der Erzeugung einer Ecke meist ein Geschwindigkeits- und beim Übergang von einer Gerade in einen Kreis ein Beschleunigungssprung. Das Abfahren einer Ecke mit zwei synchronisierten Achsen erfordert bei konstanter Bahngeschwindigkeit daher jeweils eine sprungartige Änderung der Achsgeschwindigkeiten. Da das Beschleunigungsvermögen der bestehenden Achsen begrenzt ist, kann die Beschleunigung jedoch nicht beliebig hoch sein bzw. die hohen Beschleunigungsänderungen regen die Maschinenstruktur zu Schwingungen an. Die für die Erzeugung der Relativbewegung zwischen dem Werkzeug und dem Werkstück eingesetzten Vorschubantriebe können daher nur zeitkontinuierliche Änderungen in den Bewegungsgrößen Position, Geschwindigkeit oder Beschleunigung erreichen, wodurch das exakte Abfahren unstetiger Profile nicht möglich ist. Vielmehr ermöglichen konventionelle Lösungen meist nur stetige Änderungen der Position, der Geschwindigkeit und der Beschleunigung. Für das genannte Beispiel des Abfahrens einer Ecke gibt es unterschiedliche Strategien, welche jedoch immer einen Kompromiss darstellen, da entweder die Bahngeschwindigkeit verringert werden muss, die Ecke mir einer Verrundung versehen wird oder ein Zusatzweg eingefügt werden muss. Häufig kommt es daher in solchen Situationen zu einer teilweise erheblichen Verringerung der Geschwindigkeit, was nicht nur einen Zeitverlust darstellt und die Bearbeitung verlängert, sondern bei bestimmten Anwendungen, wie zum Beispiel dem Laserstrahlschneiden, auch Beschädigungen des Werkstücks hervorrufen kann.

Es wurde bereits versucht, die beschriebene Problematik dadurch zu umgehen, dass mit Hilfe großer Antriebsleistungen die notwendige Zeit für eine Geschwindigkeitsänderung minimiert wird. Dies führt jedoch zu entsprechend großen Reaktionskräften bzw. -momenten, die konstruktiv abgeleitet werden müssen, was wiederum zu den oben genannten Schwingungsanregungen der Maschinenstruktur führen kann.

Zur Steigerung der Dynamik solcher Antriebe wurde unter anderem auch eine semiaktive Dämpfung der Resonanzfrequenzen mittels eines Reibkraftaktors vorgeschlagen. Weitere Lösungen sehen neuartige Geschwindigkeitsregler zur Steigerung der Bahnbreite von niedrig übersetzten Vorschubantrieben oder den Einsatz alternativer Regelungsverfahren zur Steigerung der Reglerdynamik vor. Auch nachgiebige Spindellagerungen zur Tilgung von Resonanzfrequenzen sind ein bekannter Ansatz.

Im Bereich der Werkzeugmaschinen wird also häufig ein möglichst genaues Abfahren der Werkstückgeometrie gefordert. Gleichzeitig erfordern viele Prozesse eine möglichst konstante Bahngeschwindigkeit. Sämtliche der bekannten Lösungen stellen dabei lediglich einen Kompromiss zwischen diesen Anforderungen dar und haben bislang jedoch noch zu keiner systematischen Lösung der oben beschriebenen Problematik geführt.

Bei der Handhabung von Werkstücken bzw. beliebigen Gegenständen mittels Manipulatoren bzw. Handhabungseinrichtungen oder anderen geeigneten Werkzeugen ergibt sich eine sehr ähnliche Problematik wie oben unter Bezugnahme auf die Vorschubantriebe beschrieben.

Eine gattungsgemäße Vorrichtung und ein entsprechendes Verfahren sind aus der WO 2008/127173 A1 bekannt.

Die JP 01177938 A1 beschreibt eine Vorrichtung zur Erzeugung einer Relativbewegung zwischen einem Werkzeug und einem Werkstück mit einer Grundantriebseinrichtung in Form eines Kugelgewindetriebs und einer Impulsübertragungseinrichtung in Form eines piezoelektrischen Aktors, der lineare Impulse auf die Kugelgewindespindel überträgt.

Es ist Aufgabe der vorliegenden Erfindung, eine Vorrichtung und ein Verfahren zur Erzeugung einer Relativbewegung zwischen einem Werkzeug und einem Werkstück zu schaffen, bei denen mit einfachen Mitteln eine Erhöhung der Dynamik erreicht werden kann. Hier ist eine wesentliche Bestrebung, die Bearbeitungszeit, Prozessgüte sowie Genauigkeit zu maximieren.

Erfindungsgemäß wird diese Aufgabe durch die in Anspruch 1 genannten Merkmale gelöst.

Im Zusammenhang mit der Erfindung schließt der hierin verwendete Begriff "Grundantriebseinrichtung" die unterschiedlichsten Konfigurationen von Einrichtungen ein, mit denen eine Relativbewegung zwischen einem Werkzeug und einem Werkstück erreicht werden kann. Insbesondere sind hierin sowohl ein- als auch mehrachsige Konfigurationen eingeschlossen.

Der Begriff "Werkzeug", wie er hierin verwendet wird, schließt auch Manipulatoren bzw. Handhabungseinrichtungen ein, die zur Handhabung von Werkstücken bzw. beliebigen Gegenständen eingesetzt werden.

Mit dem hierin verwendeten Begriff "Beschleunigung" ist sowohl eine positive als auch eine negative Beschleunigung, also eine Verzögerung, gemeint.

Durch die erfindungsgemäße Impulsübertragungseinrichtung ist es möglich, zu jedem beliebigen bzw. notwendigen Zeitpunkt einen mechanischen Impulsbetrag per Stoß bzw. stoßartig auf die Grundantriebseinrichtung zu übertragen, um auf diese Weise die Geschwindigkeit der Grundantriebseinrichtung und somit des angetriebenen Elements zumindest annähernd sprungförmig zu verändern. Die erfindungsgemäße Impulsübertragungseinrichtung ist somit in der Lage, einen Geschwindigkeitssprung der Grundantriebseinrichtung zu erreichen, der bezüglich seiner Steilheit mit bekannten Mitteln nicht erreicht werden kann. Je nach Ausgangsbedingungen seitens der Grundantriebseinrichtung und der Impulsübertragungseinrichtung ist es dabei möglich, unterschiedlich hohe Impulsbeträge zu übertragen.

Ein besonderer Vorteil der erfindungsgemäßen Lösung liegt dabei darin, dass die Rückwirkung von Reaktionskräften auf Maschinenrahmen bzw. -fundamente beim Beschleunigen gemindert werden, so dass keine zusätzliche Steifigkeit derselben notwendig ist.

Weiter kann durch die für die Impulsübertragung notwendige Masse durch kurzzeitige Beschleunigung derselben eine Zusatzkraft auf den Grundantrieb aufgebracht werden, was für ein verbessertes Beschleunigungsverhalten oder auch zur aktiven Schwingungsdämpfung genutzt werden kann. Dennoch können, falls erforderlich, auch geeignete Dämpfungselemente zum Einsatz kommen.

Ein weiterer Vorteil des beschriebenen Einsatzes der Impulsübertragungseinrichtung besteht außerdem darin, dass dadurch die Grundantriebseinrichtung schwächer ausgelegt werden kann, da die Impulsübertragungseinrichtung dynamische Spitzen abdecken kann.

Die erfindungsgemäße Lösung ermöglicht bei entsprechender Auslegung somit eine ideale Bahnführung des Werkzeugs relativ zu dem Werkstück auch auf unstetigen Profilen, da die Impulsübertragungseinrichtung wie oben beschrieben in der Lage ist, Geschwindigkeits- und Beschleunigungssprünge in das Bewegungsprofil der Grundantriebseinrichtung einzubringen. Dadurch können Bahnprofile einfacher als bislang gestaltet werden, da Limitierungen des Rucks bei sprungartigen Beschleunigungsänderungen bzw. der Beschleunigung bei Geschwindigkeitsänderungen nicht mehr betrachtet werden müssen. Die geeignete Auslegung des von der Impulsübertragungseinrichtung übertragenen Impulses, unter anderem auch der Höhe der aufgebrachten Kraft und des Zeitpunkts der Impulsübertragung, hängt dabei von den jeweiligen Anforderungen ab, lässt sich für einen Fachmann durch Zugriff auf geeignete bekannte Algorithmen oder Vorgehensweisen jedoch durchaus ermitteln.

Unter Nutzung des neuartigen Antriebskonzeptes ist in Folge idealerweise eine konstant hohe Bahngeschwindigkeit erreichbar, was sich positiv auf Bearbeitungszeit und Prozessqualität auswirkt. Gleichzeitig kann im Falle einer spanenden Bearbeitung die Geometriegenauigkeit der Werkstücke an Kanten oder ähnlichen Unstetigkeiten verbessert werden, da die entsprechenden Vorschubantriebe auch solchen Bewegungsprofilen nahezu ideal folgen können. Diese mit einer entsprechenden, als Zusatzantrieb wirkenden Impulsübertragungseinrichtung ausgestatteten Vorschubantriebe können somit auch unstetige Geschwindigkeits- bzw. Beschleunigungsprofile abfahren und dadurch Bearbeitungszeit, Prozessgüte oder Konturgenauigkeit optimieren.

Erfindungsgemäß weist die Impulsübertragungseinrichtung wenigstens eine bewegliche Masse und wenigstens eine Antriebseinrichtung für die wenigstens eine bewegliche Masse auf. Auf diese Weise ist die Übertragung des Impulses auf die Grundantriebseinrichtung im Rahmen einer einfachen konstruktiven Lösung möglich.

Um eine maximal hohe Wirkung des auf die Grundantriebseinrichtung übertragenen Impulses zu erreichen, weist die Impulsübertragungseinrichtung wenigstens ein Anschlagelement für die wenigstens eine bewegliche Masse auf. Dabei wird durch das Anschlagen der beweglichen Masse an dem wenigstens einen Anschlagelement die Übertragung eines Impulses auf die Grundantriebseinrichtung erreicht.

Des Weiteren weist erfindungsgemäß die Impulsübertragungseinrichtung zwei einander gegenüberliegend angeordnete Anschlagelemente für eine der beweglichen Massen auf. Auf diese Weise lassen sich Impulse in unterschiedlichen Richtungen auf die Grundantriebseinrichtung übertragen, was die Flexibilität der erfindungsgemäßen Vorrichtung wesentlich erhöht.

Eine sehr praxisrelevante Ausführungsform der Erfindung kann darin bestehen, dass die Antriebseinrichtung für die wenigstens eine bewegliche Masse ein fluidisches und/oder magnetisches und/oder elektrisches Antriebsprinzip aufweist.

Des Weiteren kann vorgesehen sein, dass die Impulsübertragungseinrichtung mehrere bewegliche Massen aufweist, die jeweils eine unterschiedliche Masse und/oder unterschiedliche Verfahrwege aufweisen. Dadurch lässt sich nicht nur eine hohe Anzahl an Impulsen innerhalb einer sehr kurzen Zeit aufbringen, sondern es ist auch auf sehr einfache Weise möglich, die Höhe des aufzubringenden Impulses an die jeweiligen Erfordernisse anzupassen, was zu einer sehr flexiblen Lösung führt.

Eine einfache Konstruktion der erfindungsgemäßen Vorrichtung ergibt sich, wenn die wenigstens eine Impulsübertragungseinrichtung mechanisch mit der Grundantriebseinrichtung gekoppelt ist. Dabei kann die Antriebskraft der Impulsübertragungseinrichtung entweder gegen die Grundantriebseinrichtung oder aber weitere Maschinenteile abgestützt werden.

Bezüglich der Wirkung der erfindungsgemäßen Vorrichtung ist es besonders vorteilhaft, wenn die wenigstens eine Impulsübertragungseinrichtung den Impuls stoßartig oder ruckartig an die Grundantriebseinrichtung überträgt.

Des Weiteren kann vorgesehen sein, dass die wenigstens eine Impulsübertragungseinrichtung ein lineares oder rotatorisches Antriebsprinzip aufweist. Dadurch lässt sich die erfindungsgemäße Impulsübertragungseinrichtung mit vergleichsweise geringem Aufwand realisieren.

Um möglichst geringe Reaktionskräfte auf die mit der Impulsübertragungseinrichtung verbundene Struktur zu erzeugen, kann des Weiteren vorgesehen sein, dass die wenigstens eine Impulsübertragungseinrichtung so angeordnet ist, dass der Impuls wenigstens annähernd im Schwerpunkt einer mit der Impulsübertragungseinrichtung verbundenen Struktur wirkt.

Ein erfindungsgemäßes Verfahren zur Erzeugung einer Relativbewegung zwischen einem Werkzeug und einem Werkstück ist in Anspruch 8 angegeben.

Durch die erfindungsgemäße Übertragung eines Impulses auf die Grundantriebseinrichtung mittels der wenigstens einen Impulsübertragungseinrichtung kann zu jedem beliebigen bzw. notwendigen Zeitpunkt erreicht werden, dass die Geschwindigkeit der Grundantriebseinrichtung und somit des angetriebenen Elements zumindest annähernd sprungförmig verändert wird. Das erfindungsgemäße Verfahren nutzt also das physikalische Prinzip der Impulsübertragung, gemäß dem es beim Stoß zweier Körper zu einem Sprung der Geschwindigkeiten kommt, mit welchen sich diese Körper vor und nach dem Stoß bewegen.

Dabei ist außerdem vorteilhaft, dass die bei der vor Impulsübertragung notwendigen Beschleunigung der Masse der Impulsübertragungseinrichtung auftretenden Reaktionskräfte zeitlich über einen deutlich längeren Zeitraum verteilt werden und insgesamt der Betrag von Reaktionskräften auf den Rahmen bzw. die Fundamente einer Maschine, mit bzw. an der das Verfahren ausgeführt wird, minimiert wird.

Das erfindungsgemäße Verfahren ermöglicht bei einer entsprechenden Auslegung auch auf unstetigen Profilen eine ideale Bahnführung des Werkzeugs relativ zu dem Werkstück, da durch die erfindungsgemäße Übertragung des Impulses Geschwindigkeits- und Beschleunigungssprünge in das Bewegungsprofil der Grundantriebseinrichtung eingebracht werden können. Daraus resultiert eine konstant hohe, sich positiv auf die Bearbeitungszeit und die Prozessqualität auswirkende Bahngeschwindigkeit. Des Weiteren ermöglicht das erfindungsgemäße Verfahren im Idealfall eine Reduktion der bei Beschleunigungsvorgängen auftretenden Reaktionskräfte auf weitere Maschinenkomponenten.

Eine sehr gute Wirkung des Verfahrens wird erreicht, wenn in einer vorteilhaften Weiterbildung der Impuls mittels der wenigstens einen Impulsübertragungseinrichtung stoßartig oder ruckartig an die Grundantriebseinrichtung übertragen wird.

Nachfolgend sind Ausführungsbeispiele der Erfindung anhand der Zeichnung prinzipmäßig dargestellt.

Es zeigt:
- Fig. 1: eine Prinzipdarstellung der erfindungsgemäßen Vorrichtung;
- Fig. 2: eine Ausführungsform der Impulsübertragungseinrichtung der erfindungsgemäßen Vorrichtung;
- Fig. 3: eine Ausführungsform der erfindungsgemäßen Vorrichtung; und
- Fig. 4: eine weitere Ausführungsform der erfindungsgemäßen Vorrichtung.

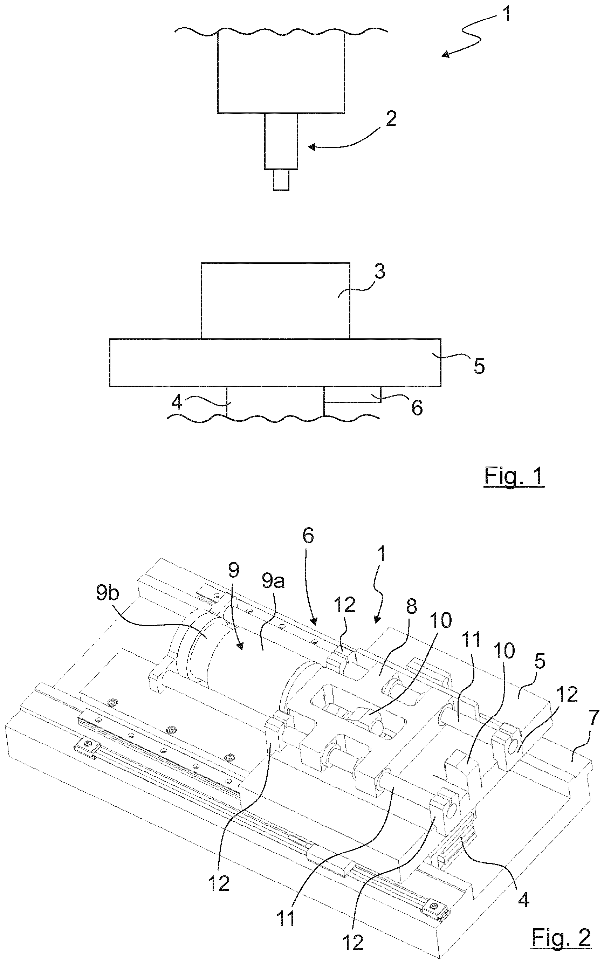

Fig. 1 zeigt auf äußerst schematische Weise eine Vorrichtung 1 zur Erzeugung einer Relativbewegung zwischen einem Werkzeug 2 und einem Werkstück 3, insbesondere in Werkzeugmaschinen, Fertigungs- oder Handhabungsanlagen. Die Vorrichtung 1 weist eine Grundantriebseinrichtung 4 auf, die zumindest mittelbar auf das Werkzeug 2 oder das Werkstück 3 einwirkt. Im vorliegenden Fall wirkt die Grundantriebseinrichtung 4 auf einen Maschinentisch 5, auf dem sich das Werkstück 3 befindet, sodass die Position des Werkstücks 3 relativ zu dem Werkzeug 2 durch Verändern der Position des Maschinentischs 5 mittels der Grundantriebseinrichtung 4 verändert werden kann. Während im dargestellten Ausführungsbeispiel die Grundantriebseinrichtung 4 also das Werkstück 3 antreibt, ist es selbstverständlich auch möglich, das Werkzeug 2 mittels der Grundantriebseinrichtung 4 anzutreiben.

Des Weiteren kann es sich bei der Grundantriebseinrichtung 4 auch um eine mehrachsige Einrichtung handeln, d. h. es ist möglich, dass mit der Grundantriebseinrichtung 4 mehrere Achsen der Vorrichtung 1, die Teil der Werkzeugmaschine bzw. der Fertigungs- oder Handhabungsanlage bzw. durch dieselbe gebildet sein kann, anzutreiben. Zusätzlich oder alternativ ist es auch möglich, mehrere der Grundantriebseinrichtungen 4 vorzusehen, mit denen jeweils eine oder mehrere Achsen der Vorrichtung 1 oder der Werkzeugmaschine bzw. der Fertigungs- oder Handhabungsanlage angetrieben werden. Dabei kann selbstverständlich auch sowohl das Werkzeug 2 als auch das Werkstück 3 angetrieben werden.

Die Vorrichtung 1 weist des Weiteren eine Impulsübertragungseinrichtung 6 auf, die dazu dient bzw. dazu in der Lage ist, einen Impuls auf die Grundantriebseinrichtung 4 zu übertragen. Dieser von der Impulsübertragungseinrichtung 6 auf die Grundantriebseinrichtung 4 übertragene Impuls wird stoßartig bzw. ruckartig übertragen. Durch dieses nachfolgend näher beschriebene Übertrage des Impulses auf die Grundantriebseinrichtung 4 ist es möglich, die Geschwindigkeit der Grundantriebseinrichtung 4 zumindest annähernd sprungförmig zu verändern. Mit anderen Worten, die Vorrichtung 1 ist in der Lage, ein Verfahren durchzuführen, bei dem eine Relativbewegung zwischen dem Werkzeug 2 und dem Werkstück 3 mittels des Einwirkens der Grundantriebseinrichtung 4 auf das Werkzeug 2 oder das Werkstück 3 stattfindet, wobei mittels der Impulsübertragungseinrichtung 6 ein Impuls auf die Grundantriebseinrichtung 4 übertragen wird, um die Geschwindigkeit der Grundantriebseinrichtung 4 zumindest annähernd sprungförmig zu verändern. Durch diese Möglichkeit der sprungförmigen Änderung der Geschwindigkeit kann die Grundantriebseinrichtung 4 zum Beispiel im Falle einer spanenden Bearbeitung auch Unstetigkeiten einer zu erzeugenden Geometrie sehr exakt folgen.

In Fig. 2 ist eine Ausführungsform der Impulsübertragungseinrichtung 6 dargestellt, die an eine beispielhafte Grundantriebseinrichtung 4 gekoppelt ist. Die Kopplung der Impulsübertragungseinrichtung 6 mit der Grundantriebseinrichtung 4 ist bei sämtlichen hierin beschriebenen Ausführungsformen derart ausgeführt, dass die Impulsübertragungseinrichtung 6 mechanisch mit der Grundantriebseinrichtung 4 gekoppelt ist. Bei der in Fig. 2 dargestellten Ausführungsform weist die Impulsübertragungseinrichtung 6 ein lineares Antriebsprinzip auf. Es ist jedoch auch möglich, die Impulsübertragungseinrichtung 6 mit einem rotatorischen Antriebsprinzip auszubilden.

Bei der Ausführungsform von Fig. 2 ist der Maschinentisch 5 gegenüber einem Maschinenbett 7 verschieblich gelagert. Um diese Verschiebung des Maschinentischs 5 gegenüber dem Maschinenbett 7 zu erreichen, ist die Grundantriebseinrichtung 4 zwischen dem Maschinentisch 5 und dem Maschinenbett 7 angeordnet.

Bei der Grundantriebseinrichtung 4 kann es sich in diesem Fall zum Beispiel um einen Linearantrieb bekannter Bauart handeln. Selbstverständlich sind jedoch auch andere Bauformen der Grundantriebseinrichtung 4 denkbar, beispielsweise unter Verwendung eines Kugelgewindetriebs. Auch hydraulische oder pneumatische Ausführungen der Grundantriebseinrichtung 4 sind prinzipiell möglich.

Die Impulsübertragungseinrichtung 6 ist im vorliegenden Fall auf dem Maschinentisch 5 angeordnet und weist eine bewegliche Masse 8 sowie eine Antriebseinrichtung 9 zum Antrieb der wenigstens einen beweglichen Masse 8 auf, die in diesem Fall nach einem linearen Antriebsprinzip arbeitet. Des Weiteren weist die Impulsübertragungseinrichtung 6 zwei Anschlagelemente 10 für die bewegliche Masse 8 auf. Durch die Verwendung zweier Anschlagelemente 10 kann der Impuls, der von der Impulsübertragungseinrichtung 6 auf die Grundantriebseinrichtung 4 übertragen wird, in zwei unterschiedlichen Richtungen übertragen werden. Die beiden Anschlagelemente 10 sind erfindungsgemäß einander gegenüberliegend angeordnet. Die bewegliche Masse 8 ist mittels jeweiliger Führungen 11 geführt. Die Führungen 11 sind dabei mittels jeweiliger Halteelemente 12 mit dem Maschinentisch 5 verbunden.

Die Antriebseinrichtung 9 für die bewegliche Masse 8 kann ein fluidisches und/oder magnetisches und/oder elektrisches Antriebsprinzip aufweisen. Im dargestellten Ausführungsbeispiel weist die Antriebseinrichtung 9 ein magnetisches Antriebsprinzip auf und ist als Tauchspule mit einem Topf 9a und einer Spule 9b ausgebildet. Da die Funktionsweise einer Tauchspule an sich bekannt ist, wird hierin nicht näher darauf eingegangen. Mit der Antriebseinrichtung 9 kann, unabhängig von deren Antriebsprinzip, die bewegliche Masse 8 beschleunigt werden. Durch den Aufprall der beweglichen Masse 8 auf eines der Anschlagelemente 10 ergibt sich ein Impulsbetrag, der aufgrund der in diesem Fall mechanischen Kopplung der Impulsübertragungseinrichtung 6 mit der Grundantriebseinrichtung 4 auf die Grundantriebseinrichtung 4 übertragen wird, sodass, wie oben angegeben, die Geschwindigkeit der Grundantriebseinrichtung 4 zumindest annähernd sprungförmig verändert werden kann, was beispielsweise im Falle von Unstetigkeiten eines bestimmten zu folgenden Bahnverlaufs eingesetzt werden kann.

Die bewegliche Masse 8 einerseits und die Anschlagelemente 10 andererseits weisen dabei definierte Kontaktgeometrien auf, an welchen der Stoß und damit die Impulsübertragung zwischen der beweglichen Masse 8 und dem Maschinentisch 5 und damit der Grundantriebseinrichtung 4 erfolgt. Im vorliegenden Fall ergibt sich die mechanische Kopplung der Impulsübertragungseinrichtung 6 mit der Grundantriebseinrichtung 4 durch die Anordnung der Anschlagelemente 10 auf dem Maschinentisch 5, das wiederum direkt mit der Grundantriebseinrichtung 4 verbunden ist. Die für den beschriebenen Geschwindigkeitssprung notwendige Relativgeschwindigkeit der bewegten Masse 8 der Impulsübertragungseinrichtung 6 kann bereits vor Erreichen der oben erwähnten Unstetigkeit, bei der der Impuls übertragen werden sollte, über einen geeigneten Zeitraum aufgebaut werden. Der hierzu erforderliche zeitliche Vorlauf und die sich dadurch ergebende Synchronisierung des Zeitpunkts, zu dem der Stoß erfolgt, auf die Bahn kann von einem Fachmann ermittelt und festgelegt werden. Dies gilt in gleicher Weise auch für die gesamte Steuerung der Vorrichtung 1, insbesondere der Impulsübertragungseinrichtung 6, sowie für den Aufbau bzw. die Auslegung der Impulsübertragungseinrichtung 6.

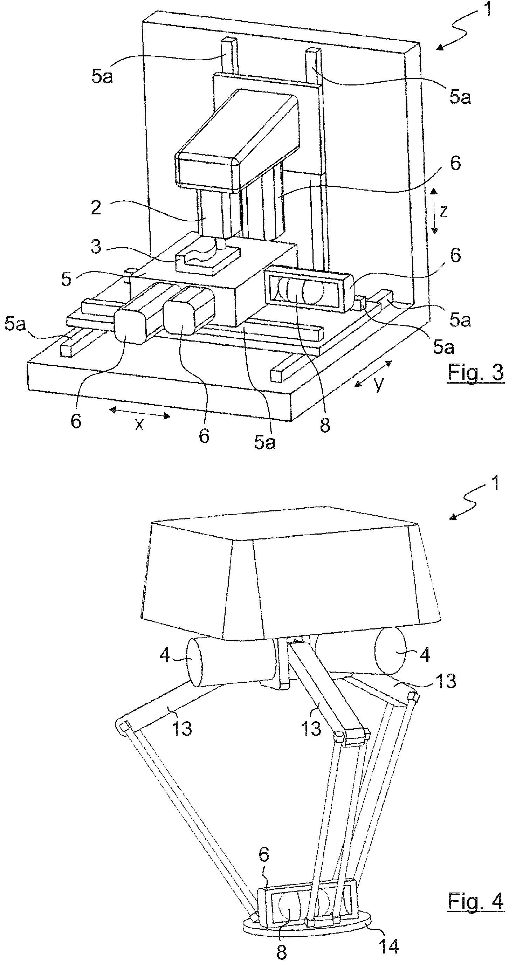

Fig. 3 zeigt die Vorrichtung 1 mit mehreren Möglichkeiten zur Anordnung der Impulsübertragungseinrichtung 6 bzw. mit mehreren Impulsübertragungseinrichtungen 6. Hierbei ist das Werkzeug 2 relativ zu dem sich auf dem Maschinentisch 5 befindenden Werkstück 3 in den Richtungen x, y und z mit entsprechenden Achsen x, y und z, geführt durch entsprechende Linearführungen 5a beweglich. In diesem Ausführungsbeispiel bewegen die Achsen x und y das Werkstück 3, wohingegen die Achse z das Werkzeug 2 bewegt, was jedoch als rein beispielhaft anzusehen ist. Die zum Antrieb der Achsen x, y und z notwendigen Grundantriebseinrichtungen 4 sind in Fig. 3 jedoch nicht dargestellt.

Aus der Darstellung von Fig. 3 ist erkennbar, dass zur Anordnung der Impulsübertragungseinrichtung 6 grundsätzlich unterschiedliche Möglichkeiten bestehen. Insgesamt sind bei der Darstellung gemäß Fig. 3 vier der Impulsübertragungseinrichtungen 6 vorgesehen, wobei für die Richtungen bzw. Achsen x und z jeweils eine und für die Richtung bzw. Achse y zwei Impulsübertragungseinrichtungen 6 vorgesehen sein. Durch die beiden für die Richtung y vorgesehenen Impulsübertragungseinrichtungen 6 können beispielsweise unterschiedliche Impulsbeträge oder eine schnellere Ansteuerung der entsprechenden Werkzeugachse erreicht werden.

Selbstverständlich sind auch beliebige andere Kombinationen hinsichtlich der Anordnung der Impulsübertragungseinrichtungen 6 denkbar. Des Weiteren weisen sämtliche der Impulsübertragungseinrichtungen 6 vorzugsweise jeweils die bewegliche Masse 8 auf, obwohl diese lediglich für die auf die Achse x wirkende Impulsübertragungseinrichtung 6 dargestellt ist.

Fig. 4 zeigt eine weitere Ausführungsform der Vorrichtung 1. Hierbei handelt es sich um eine sogenannte Delta-Roboterkinematik, die grundsätzlich in an sich bekannter Weise aufgebaut sein kann und die insbesondere zur Handhabung von Werkstücken bzw. allgemein Gegenständen dient. Im vorliegenden Fall weist die Vorrichtung 1 drei Arme 13 auf, die dazu ausgebildet sind, eine Plattform 14 zu bewegen, an der ein entsprechender Manipulator oder ein anderes Handhabungsgerät angeordnet sein kann. Zum Antrieb der Arme 13 dienen jeweilige Grundantriebseinrichtungen 4, von denen zwar vorzugsweise drei vorhanden sind, in der Darstellung von Fig. 4 jedoch nur zwei erkennbar sind. Des Weiteren ist die Impulsübertragungseinrichtung 6 vorgesehen, die im vorliegenden Fall direkt der Plattform 14 zugeordnet ist und so Geschwindigkeitsänderungen in einer bestimmten Richtung unterstützen kann.

Bei der Ausführungsform der Vorrichtung 1 gemäß Fig. 4 handelt es sich somit im Gegensatz zu der Ausführungsform von Fig. 3 um eine nicht-kartesische Ausgangskinematik. Des Weiteren ist die Impulsübertragungseinrichtung 6 nicht parallel bzw. koaxial zu der Grundantriebseinrichtung 4 angeordnet. Stattdessen ist die Wirkrichtung der Impulsübertragungseinrichtung 6 zu der Arbeitsrichtung der Plattform 14 bzw. dem Manipulator hin ausgerichtet.

Vorzugsweise ist die Impulsübertragungseinrichtung 6 bei sämtlichen hierin beschriebenen Ausführungsformen so angeordnet, dass der Impuls wenigstens annähernd im Schwerpunkt einer mit der Impulsübertragungseinrichtung 6 verbundenen Struktur, also zum Beispiel des Maschinentisches 5, wirkt. Auf diese Weise werden die auf die mit der Impulsübertragungseinrichtung 6 verbundene Struktur wirkenden Reaktionskräfte minimiert und es werden Kippmomente und dadurch verursachte Taumeleffekte und ähnliches vermieden. Durch entsprechende Anordnung der Impulsübertragungseinrichtung 6 können jedoch auch Wirkungen unter bestimmten Winkeln hervorgerufen werden, falls dies aus bestimmten Gründen sinnvoll ist.

Des Weiteren ist es bei sämtlichen hierin beschriebenen Ausführungsformen möglich, dass die Impulsübertragungseinrichtung 6 mehrere der beweglichen Massen 8 aufweist. Diese können jeweils eine unterschiedliche Masse und/oder unterschiedliche Verfahrwege aufweisen. Dadurch ist eine einfache Anpassung der Impulsübertragungseinrichtung 6 an verschiedene Anforderungen möglich, zum Beispiel wenn sich die Masse des Werkstücks 3 über die Zeit verändert, wie dies beispielsweise bei einer spanenden Bearbeitung der Fall ist.

Die beschriebene Vorrichtung 1 lässt sich für die unterschiedlichsten Zwecke einsetzen, von denen nachfolgend einige angeführt sind:
High-Speed-Cutting (HSC) - Bearbeitung: Hierbei wird eine hohe, gleichmäßige Bahngeschwindigkeit für eine gute Oberflächengüte gefordert, es treten aber zugleich niedrige Zerspankräfte und geringe Spanvolumina auf.

Wasserstrahl- bzw. Laserschneiden: Hierbei entstehen keine Prozesskräfte in Vorschubrichtung und eine Schnittflächenrauigkeit bzw. eine konstante Schneidfugenbreite steht in Zusammenhang mit der Vorschubgeschwindigkeit.

Laserschweißen: Hierbei ist eine konstante Bahngeschwindigkeit für Prozesse wie beispielsweise Tiefschweißen erforderlich.

Handling bzw. Pick & Place: Zwar ist die Bahngenauigkeit typischerweise vernachlässigbar, für eine optimale Produktivität sind jedoch große Beschleunigungen notwendig, welche durch die Struktur aufgenommen werden müssen.

Additive Fertigung: Hierbei treten geringe bis verschwindende Prozesskräfte auf, die Beschleunigung und die Bahngeschwindigkeit beeinflussen jedoch die Produktivität und die Maßhaltigkeit der Werkstücke.

Des Weiteren wäre es möglich, die Trägheit der beweglichen Masse 8 zusätzlich zu nutzen, um bestimmte Teile der Vorrichtung 1 in geeigneter Weise zu unterstützen, beispielsweise indem die Impulsübertragungseinrichtung 6 mit hoher Geschwindigkeit in einer Richtung relativ zu dem zu beeinflussenden Teil, beispielsweise dem Maschinentisch 5 verfahren wird, um eine Reaktionskraft auf das zu beeinflussende Teil aufzubringen.

## Patentansprüche

1. Vorrichtung (1) zur Erzeugung einer Relativbewegung zwischen einem Werkzeug (2) und einem Werkstück (3), insbesondere in Werkzeugmaschinen, Fertigungs- oder Handhabungsanlagen, mit einer Grundantriebseinrichtung (4), die zumindest mittelbar auf das Werkzeug (2) und/oder das Werkstück (3) einwirkt, und mit
wenigstens einer Impulsübertragungseinrichtung (6) zum Übertragen eines mechanischen Impulses auf die Grundantriebseinrichtung (4), wobei die Impulsübertragungseinrichtung (6) wenigstens eine bewegliche Masse (8), wenigstens eine Antriebseinrichtung (9) für die wenigstens eine bewegliche Masse (8) und wenigstens ein Anschlagelement (10) für die wenigstens eine bewegliche Masse (8) aufweist,
**dadurch gekennzeichnet, dass**
die Impulsübertragungseinrichtung (6) zwei einander gegenüberliegend angeordnete Anschlagelemente (10) für eine der beweglichen Massen (8) aufweist.

2. Vorrichtung nach Anspruch 1, **dadurch gekennzeichnet, dass** die Antriebseinrichtung (9) für die wenigstens eine bewegliche Masse (8) ein fluidisches und/oder magnetisches und/oder elektrisches Antriebsprinzip aufweist.

3. Vorrichtung nach Anspruch 1 oder 2, **dadurch gekennzeichnet, dass** die Impulsübertragungseinrichtung (6) mehrere bewegliche Massen (8) aufweist, die jeweils eine unterschiedliche Masse und/oder unterschiedliche Verfahrwege aufweisen.

4. Vorrichtung nach einem der Ansprüche 1 bis 3, **dadurch gekennzeichnet, dass** die wenigstens eine Impulsübertragungseinrichtung (6) mechanisch mit der Grundantriebseinrichtung (4) gekoppelt ist.

5. Vorrichtung nach einem der Ansprüche 1 bis 4, **dadurch gekennzeichnet, dass** die wenigstens eine Impulsübertragungseinrichtung (6) den Impuls stoßartig oder ruckartig an die Grundantriebseinrichtung (4) überträgt.

6. Vorrichtung nach einem der Ansprüche 1 bis 5, **dadurch gekennzeichnet, dass** die wenigstens eine Impulsübertragungseinrichtung (6) ein lineares oder rotatorisches Antriebsprinzip aufweist.

7. Vorrichtung nach einem der Ansprüche 1 bis 6, **dadurch gekennzeichnet, dass** die wenigstens eine Impulsübertragungseinrichtung (6) so angeordnet ist, dass der Impuls wenigstens annähernd im Schwerpunkt einer mit der Impulsübertragungseinrichtung (6) verbundenen Struktur wirkt.

8. Verfahren zur Erzeugung einer Relativbewegung zwischen einem Werkzeug (2) und einem Werkstück (3), insbesondere in Werkzeugmaschinen-Fertigungs- oder Handhabungsanlagen, wobei das Werkzeug (2) und/oder das Werkstück (3) mit einer Grundantriebseinrichtung (4) angetrieben wird, wobei mittels wenigstens einer Impulsübertragungseinrichtung (6) ein mechanischer Impuls auf die Grundantriebseinrichtung (4) übertragen wird, um die Geschwindigkeit der Grundantriebseinrichtung (4) zumindest annähernd sprungförmig zu verändern, wobei die Impulsübertragungseinrichtung (6) wenigstens eine bewegliche Masse (8), wenigstens eine Antriebseinrichtung (9) für die wenigstens eine bewegliche Masse (8) und wenigstens ein Anschlagelement (10) für die wenigsten eine bewegliche Masse (8) aufweist, **dadurch gekennzeichnet, dass**
mittels zweier einander gegenüberliegend angeordneter Anschlagelemente (10) für eine der beweglichen Masen (8) Impulse in unterschiedlichen Richtungen auf die Grundantriebseinrichtung (4) übertragen werden.

9. Verfahren nach Anspruch 8, **dadurch gekennzeichnet, dass** der Impuls mittels der wenigstens einen Impulsübertragungseinrichtung (6) stoßartig oder ruckartig an die Grundantriebseinrichtung (4) übertragen wird.

## Claims

1. Apparatus (1) for generating a relative movement between a tool (2) and a workpiece (3), in particular in machine tools, manufacturing or handling systems, having a basic drive device (4) which acts at least indirectly on the tool (2) and/or the workpiece (3), and having
at least one pulse transmission device (6) for transmitting a mechanical pulse to the basic drive device (4), wherein the pulse transmission device (6) has at least one movable mass (8), at least one drive device (9) for the at least one movable mass (8) and at least one stop element (10) for the at least one movable mass (8), **characterised in that**
the pulse transmission device (6) has two stop elements (10) arranged opposite one another for one of the movable masses (8).

2. Apparatus according to claim 1, **characterised in that** the drive device (9) for the at least one movable mass (8) has a fluidic and/or magnetic and/or electrical drive principle.

3. Apparatus according to claim 1 or 2, **characterised in that** the pulse transmission device (6) has a plurality of movable masses (8), each of which has a different mass and/or different travel paths.

4. Apparatus according to one of claims 1 to 3, **characterised in that** the at least one pulse transmission device (6) is mechanically coupled to the basic drive device (4).

5. Apparatus according to one of claims 1 to 4, **characterised in that** the at least one pulse transmission device (6) transmits the pulse to the basic drive device (4) in an impulsive or jerky manner.

6. Apparatus according to one of claims 1 to 5, **characterised in that** the at least one pulse transmission device (6) has a linear or rotary drive principle.

7. Apparatus according to one of claims 1 to 6, **characterised in that** the at least one pulse transmission device (6) is arranged in such a way that the pulse acts at least approximately in the centre of gravity of a structure connected to the pulse transmission device (6).

8. Method for generating a relative movement between a tool (2) and a workpiece (3), in particular in machine tools, manufacturing or handling systems, wherein the tool (2) and/or the workpiece (3) is driven by a basic drive device (4), wherein a mechanical pulse is transmitted to the basic drive device (4) by means of at least one pulse transmission device (6), in order to change the speed of the basic drive device (4) at least approximately in an abrupt manner, the pulse transmission device (6) having at least one movable mass (8), at least one drive device (9) for the at least one movable mass (8) and at least one stop element (10) for the at least one movable mass (8),
**characterised in that**
by means of two stop elements (10) arranged opposite one another pulses are transmitted in different directions to the basic drive device (4) for one of the movable masses (8).

9. Method according to claim 8, **characterised in that** the pulse is transmitted by means of the at least one pulse transmission device (6) to the basic drive device (4) in an impulsive or jerky manner.

## Revendications

1. Dispositif (1) servant à générer un déplacement relatif entre un outil (2) et une pièce (3), notamment dans des machines-outils, des installations de fabrication ou de manutention, avec un dispositif d'entraînement de base (4) agissant au moins indirectement sur l'outil (2) et/ou la pièce (3), et avec au moins un dispositif de transmission d'impulsion (6) pour la transmission d'une impulsion mécanique au dispositif d'entraînement de base (4), dans lequel le dispositif de transmission d'impulsion (6) comporte au moins une masse mobile (8), au moins un dispositif d'entraînement (9) pour ladite au moins une masse mobile (8) et au moins un élément de butée (10) pour ladite au moins une masse mobile (8), **caractérisé en ce que**,
le dispositif de transmission d'impulsion (6) comporte deux éléments de butée (10) disposés face à face pour l'une des masses mobiles (8).

2. Dispositif selon la revendication 1, **caractérisé en ce que** le dispositif d'entraînement (9) pour ladite au moins une masse mobile (8) présente un principe d'entraînement fluidique et/ou magnétique et/ou électrique.

3. Dispositif selon la revendication 1 ou 2, **caractérisé en ce que** le dispositif de transmission d'impulsion (6) comporte plusieurs masses mobiles (8) ayant chacune une masse différente et/ou des trajectoires différentes.

4. Dispositif selon l'une des revendications 1 à 3, **caractérisé en ce que** ledit au moins un dispositif de transmission d'impulsion (6) est couplé mécaniquement avec le dispositif d'entraînement de base (4).

5. Dispositif selon l'une des revendications 1 à 4, **caractérisé en ce que** ledit au moins un dispositif de transmission d'impulsion (6) transmet l'impulsion par à-coups ou par saccades au dispositif d'entraînement de base (4).

6. Dispositif selon l'une des revendications 1 à 5, **caractérisé en ce que** ledit au moins un dispositif de transmission d'impulsion (6) présente un principe d'entraînement rotatif ou linéaire.

7. Dispositif selon l'une des revendications 1 à 6, **caractérisé en ce que** ledit au moins un dispositif de transmission d'impulsion (6) est disposé de sorte que l'impulsion agisse au moins approximativement sur le centre de gravité d'une structure reliée au dispositif de transmission d'impulsion (6).

8. Procédé pour générer un déplacement relatif entre un outil (2) et une pièce (3), notamment dans des machines-outils, des installations de fabrication ou de manutention, dans lequel l'outil (2) et/ou la pièce (3) est actionné par un dispositif d'entraînement de base (4), dans lequel une impulsion mécanique est transmise par ledit au moins un dispositif de transmission d'impulsion (6) au dispositif d'entraînement de base (4) pour modifier la vitesse du dispositif d'entraînement de base (4) au moins approximativement par un bond, dans lequel le dispositif de transmission d'impulsion (6) comprend au moins une masse mobile (8), au moins un dispositif d'entraînement (9) pour ladite au moins une masse mobile (8) et au moins un élément de butée (10) pour ladite au moins une masse mobile (8), **caractérisé en ce que**,
des impulsions dans des directions différentes sont transmises au dispositif d'entraînement de base (4) au moyen de deux éléments de butée (10) disposés face à face pour l'une des masses mobiles (8).

9. Procédé selon la revendication 8, **caractérisé en ce que** l'impulsion est transmise par à-coups ou par saccades par ledit au moins un dispositif de transmission d'impulsions (6) au dispositif d'entraînement de base (4).
